# EUROPEAN PATENT APPLICATION

(11) **EP 1 297 977 A2**
(43) Date of publication of application: **02.04.2003**
(21) Application number: 02021567.9
(22) Date of filing: 26.09.2002
(51) Int. Cl.: B60G 21/05, B60B 35/02

(54) **Axle having a torsionally deformable cross member for the rear suspension of a motor vehicle, and method for production of such axle**

(30) Priority: 28.09.2001 IT TO20010926
(71) Applicant: FIAT AUTO S.p.A., 10135 Torino (IT)
(72) Inventor: Oliva, Ettore, 80059 Torre del Greco (IT); Bechelli, Fabio, 80030 Castello di Cisterna (IT)
(74) Representative: Cerbaro, Elena

(57) **Abstract**

A rear suspension (1) with interconnected wheels for a motor vehicle has two longitudinal arms (2), which can support respective wheels (24) which can rotate around axes (26) of rotation which are coaxial to one another and can be connected to the motor vehicle in order to rotate around an axis (10) of oscillation which is spaced from the axes (26) of rotation themselves; the suspension also has a cross-member (20), which connects the arms (2) to one another and consists of an elongate intermediate element (28), which is spaced from the axis (10) of oscillation and yields resiliently to torsion around its own transverse axis (30), and of two lateral elements (32) which are disposed on opposite axial sides of the intermediate element (28) and are each connected to a corresponding arm (2); the angular position of the intermediate element (28) around its transverse axis (30) relative to the lateral elements (32) can be adjusted (30) before the lateral elements (32) and intermediate element (28) are secured to one another.

## Description

The present invention relates to a rear suspension with interconnected wheels for a motor vehicle, of the type described as a twisting-bridge suspension.

As is known, a twisting-bridge suspension comprises a pair of longitudinal arms, which each support a corresponding wheel and are connected to the body of the motor vehicle by means of interposition of a pair of springs and shock absorbers, in order to allow the wheel to oscillate around an axis which is parallel to the axis of rotation of the wheels.

The longitudinal arms are connected to one another by means of a bridge or cross-member, which keeps the wheels connected to one another but yields resiliently to torsion.

It is necessary to vary the position of the rolling centre of the rear suspension fitted onto a motor vehicle during the stages both of production of, and experimentation on the motor vehicle itself, in order to find the best arrangement for the purposes of stability, road hold and driving comfort, according to the fitting out and in particular the type of front suspension and distribution of the weights of the motor vehicle itself.

In order to meet this requirement it is known to modify the attachments of the rear suspension to the body, or to replace the rear suspension fitted onto the motor vehicle.

However, these solutions are unsatisfactory since they are complex and involve relatively long operative times. In addition, as far as the variation of the attachments of the suspension to the motor vehicle is concerned, the position of the rolling centre can be modified only within a relatively small interval of adjustment.

The object of the present invention is to produce a rear suspension with interconnected wheels for a motor vehicle which makes it possible to solve the above-described problems simply and economically.

According to the present invention a rear suspension with interconnected wheels is produced for a motor vehicle; the suspension comprising a pair of support arms which can support respective wheels which can rotate around respective axes of rotation which are coaxial to one another; means for connection of the said support arms to the said motor vehicle in order to allow the said wheels to oscillate around an axis of oscillation which is spaced from the said axes of rotation; and a cross-member to connect the said support arms to one another; characterised in that the said cross-member comprises an elongate intermediate element along a transverse axis which is spaced from the said axis of oscillation, which can yield resiliently to torsion around the said transverse axis, and a pair of lateral elements which are disposed on opposite sides of the said intermediate element along the said transverse axis, and are each connected to a corresponding said support arm; and in that it additionally comprises means for angular positioning which are interposed between the said intermediate element and the said lateral elements in order to adjust the angular position of the intermediate element in relation to the said lateral elements around the said transverse axis, and means for locking in order to connect the said intermediate element and lateral elements integrally to one another.

The present invention also relates to a method for production of a rear suspension with interconnected wheels for a motor vehicle.

According to the present invention a method is provided for production of a rear suspension with interconnected wheels for a motor vehicle; the method comprising the steps of production of a pair of support arms which can support respective wheels and can be connected to the said vehicle in order to oscillate around at least one axis of oscillation which is spaced from an axis of rotation of the said wheels, and to produce a cross-member for connection of the said support arms to one another; characterised in that the production of the said cross-member comprises the steps of production of an elongate intermediate element along its own transverse axis, which yields resiliently to torsion around the said transverse axis, and a pair of lateral elements which can be connected to the said support arms; the method comprising the further steps of placing the said intermediate element in a position spaced from the said axis of oscillation and in an intermediate axial position between the said lateral elements; of adjusting the angular position of the said intermediate element around the said transverse axis relative to the said lateral elements; and of locking the said intermediate element and lateral elements together after having adjusted the said angular position.

The invention will now be described with reference to the attached drawings, which illustrate a non-limiting embodiment of it, in which:
figure 1 illustrates in perspective a preferred embodiment of the rear suspension according to the invention with interconnected wheels for a motor vehicle;
figure 2 is a cross-section on an enlarged scale according to the line II-II in figure 1; and
figures 3 and 4 are diagrams which illustrate respectively in plan view and in rear view a graphic method for determining the rolling centre of the suspension in figure 1, with parts removed for the sake of clarity.

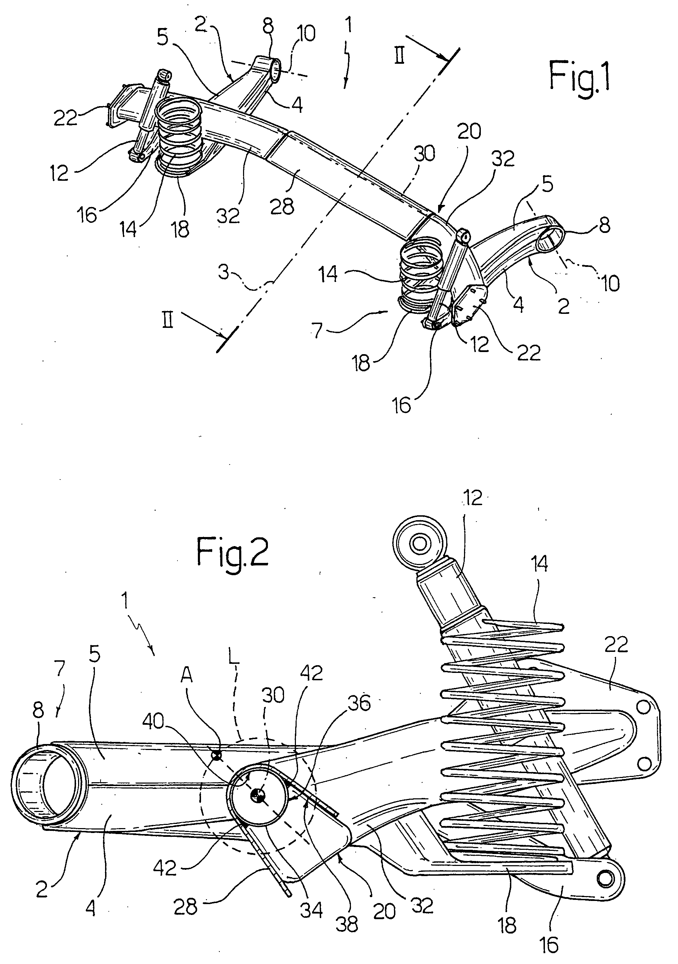

In figure 1, 1 indicates a rear suspension with interconnected wheels for a motor vehicle (not illustrated). The suspension 1, of the type described as a twisting-bridge suspension, comprises a pair of arms 2, which extend parallel to a median longitudinal direction 3 of the motor vehicle, on opposite sides of the direction 3 itself, and each comprise a pair of bodies which are produced by means of stamping of plates and are defined respectively by a lower half-shell 4 and by an upper half-shell 5 which are connected integrally to one another, preferably by means of welding.

The arms 2 are connected to the body of the motor vehicle by means of a connection unit 7, which comprises two bushes 8, each of which is supported by a corresponding arm 2 at the rear end with reference to the direction of travel of the motor vehicle, and which are pivoted in a manner which is known and not illustrated on the body in order to allow the arms 2 to rotate around respective axes 10 which are transverse to the direction 3, symmetrical relative to the direction 3 and inclined relative to one another. In particular, the axes 10 are inclined such as to obtain the best combination of axial and radial rigidity of the bushes 8, in order to oppose in use the yielding of the suspension 1 under longitudinal and transverse loads.

For each arm 2, the unit 7 additionally comprises a corresponding shock absorber 12 and a corresponding helical spring 14 interposed between respective portions for attachment of the body (not illustrated) and respective portions 16 and 18 for attachment of the suspension 1. For each arm 2, the portions 16 and 18 are defined respectively by a pivoting fork and a support plate which are disposed at the end opposite the bush 8 and are integral with the half-shell 4.

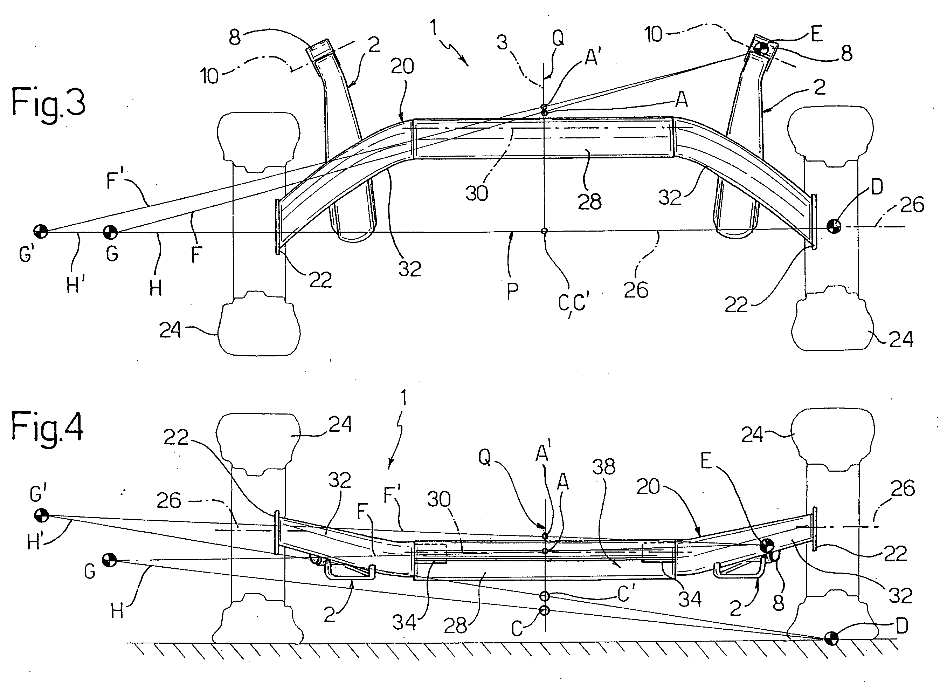

With reference to the attached figures, the arms 2 are connected to one another by a bridge or cross-member 20 comprising two end attachment plates 22 which support respective wheels 24 (illustrated schematically in figures 3 and 4) which rotate relative to the cross-member 20 itself around respective axes 26 which are coaxial to one another, at right-angles to the direction 3 and spaced from the axes 10.

The cross-member 20 additionally comprises an elongate intermediate element 28 along an axis 30 which is parallel to the axes 26, resistant to flexure, and resiliently yielding to torsion around the axis 30 itself, and a pair of substantially rigid lateral elements 32 which are disposed on opposite sides of the element 28 along the axis 30.

Each element 32 extends astride the corresponding arm 2, is connected integrally to the arm 2 itself, preferably by being welded, and is defined by a shaped tubular element, which is preferably produced by means of pot die forming. The elements 32 support integrally at their outer ends the plates 22, and at their inner ends respective pins 34, which face one another, are coaxial to one another along the axis 30 and are delimited by respective cylindrical surfaces 36, which encircle the axis 30 itself.

As illustrated in figure 2 in particular, the surfaces 36 define respective supports for the element 28, the cross-section of which, which is provided at right-angles to the axis 30, is constant along the axis 30 itself and is of the "open" type. At this point and hereinafter an "open" cross-section means a cross-section which defines a seat with an access opening, in contrast to the so-called "closed" cross-sections which are typical of the tubular elements.

The element 28 has a shape in the form of a "U" and defines a seat 38 which is engaged by the pins 34 at the axial ends of the element 28 itself. The base of the seat 38 is defined by a semi-circular surface 40, which is complementary to the surfaces 36 themselves and is connected in a sliding manner to the surfaces 36 themselves, such as to permit adjustment of the angular position of the element 28 relative to the elements 32 around the axis 30.

In order to produce the suspension 1, after having produced the arms 2 and the elements 32 and 28, the element 28 is disposed in an intermediate axial position between the elements 28 themselves and in a position spaced from the axes 10. Subsequently, the angular position of the element 28 is adjusted in relation to the elements 32 around the axis 30 and the elements 32 are secured to the element 28, for example by means of welding seams 42, and to the arms 2.

The angular position of the element 28 is adjusted in order to vary the rolling centre of the suspension 1, both during production of the motor vehicle onto which the suspension 1 itself is fitted, as previously described, or during the steps of experimentation on the motor vehicle itself.

It is possible to determine the rolling centre of the suspension 1 theoretically using the graphic method illustrated in figures 3 and 4.

In figures 2, 3 and 4, A indicates a point which lies on a median vertical plane Q which is at right-angles to the axis 26 and is defined by the shear centre of the cross-section of the element 28 disposed in an angular position which is set or defined.

With reference to figures 3 and 4 only, C indicates the rolling centre of the suspension 1 corresponding to the angular position set for the element 28, D is the theoretical mid-point of contact of a wheel 24 on the ground, E is the mid-point of attachment of the bush 8 disposed on the same side as the wheel 24 taken into consideration, and P is the vertical plane on which the axes 26 and the point D lie.

In order to determine the centre C, the points E and A are connected to one another by means of a straight line F and this straight line F extends until it intersects the plane P at a point G, which is then connected to the point D by means of a straight line H which lies on the plane P itself. The centre C is defined by the intersection of the straight line H and the plane Q.

With reference to figure 2, after the element 28 has rotated around the axis 30, the position of the shear centre varies along a circumference L, and consequently the position of the shear centre also varies.

Figures 3 and 4 illustrate by way of example a further graphic method used in order to identify a different rolling centre, indicated as C', starting from a shear centre which is located at a point A' different from the point A.

Similarly to the situation previously described, a new straight line F' is drawn instead of the straight line F, a new point G' is drawn instead of the point G, and a new straight line H' is drawn instead of the straight line H and the new centre C' is obtained as the intersection between the straight line H' and the plane Q, at a height from the ground which is different from the centre C.

On the road, if there are equal simultaneous stresses on the wheels 24, the axis around which the suspension 1 rotates is defined by the joining point of the centres of the bushes 8 (point E), whereas if there are asymmetrical stresses on the wheels 24, this axis is defined by the joining point of the point E and the shear centre on the mid-point of the vehicle (point A or A').

It is apparent from the foregoing description that the suspension 1 makes it possible to vary the position of the rolling centre C,C' within a relatively broad interval by adjusting the angular position of the element 28 around the axis 30, without modifying the points of attachment of the suspension 1 itself to the body of the motor vehicle. At the same time, the section of the cross-member 20 which yields to torsion can be defined not only by intermediate elements which have a closed cross-section (not described), but above all by intermediate elements which have an open cross-section, such as the element 28, which have limited resistance to twisting forces and can be produced relatively economically, for example by means of folding of plates.

In addition, by selecting from intermediate elements which have cross-sections different from one another but have the same thickness, it is possible to vary the resistance to twisting forces of the cross-member 20 without increasing excessively the weights of the cross-member 20, unlike the situation for the elements with a closed cross-section which yield to torsion, for which in general it is necessary to vary the thickness in order to increase the resistance to twisting forces, with consequent increases in weight.

In addition, the connection of the element 28 to the lateral elements 32 makes it possible to position angularly around the axis 20 or to replace the element 28 itself relatively easily, without adjusting the arms 2, and in particular without removing the suspension 1 from the motor vehicle. The suspension 1 can be mounted on a group of motor vehicles having a different distance, each from the other, between the rear wheels, because it is sufficient to choose and couple an element 28 having a suitable length, measured along axis 30.

Furthermore, the surfaces 36,40 enable the angular position of the element 28 around the axis 30 to be adjusted continuously.

Finally, the suspension 1 is relatively economical to produce and assemble, since it has a limited number of parts.

Finally, it is apparent from the foregoing description that modifications and variations which do not depart from the field of protection of the present invention can be made to the suspension 1 described.

The element 28 could have a form different from that illustrated and described and could be connected to the elements 32 in a manner different from that described by way of example. In particular, the element 28 could be secured to the elements 32 in a manner other than by welding by way of adjustable connecting means of a releasable type and/or a connection different from that between the surfaces 36,40 could be provided, for example, in order to adjust the angular position of the element 28 in a discrete manner with respect to elements 32.

In addition, the wheels 24 could be connected directly to the arms 2 instead of to the cross-member 20.

## Claims

1. Rear suspension (1) with interconnected wheels for a motor vehicle; the suspension comprising a pair of support arms (2) which can support respective wheels (24) which can rotate around respective axes of rotation (26) which are coaxial to one another; means (7) for connection of the said support arms (2) to the said motor vehicle in order to allow the said wheels (24) to oscillate around an axis of oscillation (10) which is spaced from the said axes (26) of rotation; and a cross-member (20) for connection of the said support arms (2) to one another; **characterised in that** the said cross-member (20) comprises an elongate intermediate element (28) along a transverse axis (30) which is spaced from the said axis (10) of oscillation, yields resiliently to torsion around the said transverse axis (30), and a pair of lateral elements (32) which are disposed on opposite sides of the said intermediate element (28) along the said transverse axis (30) and are each connected to a corresponding said support arm (2); and **in that** it additionally comprises means (36,40) for angular positioning interposed between the said intermediate element (28) and the said lateral elements (32) in order to adjust the angular position of the intermediate element (28) relative to the said lateral elements (32) around the said transverse axis (30), and means (42) for locking in order to connect the said intermediate and lateral elements (28)(32) to one another integrally.

2. Suspension according to claim 1, **characterised in that** the said means for locking comprise a weld (42).

3. Suspension according to claim 1 or claim 2, **characterised in that** the cross-section of the said intermediate element (28) which is provided at right-angles to the said transverse axis (30) is an open cross-section.

4. Suspension according to any one of the preceding claims, **characterised in that** the said means (36,40) for angular positioning comprise first (40) and second (36) surfaces which are supported respectively by the said intermediate element (28) and the said lateral elements (32) and are connected to one another in a sliding manner.

5. Suspension according to claim 4, **characterised in that** the said first and second surfaces (36) (40) are cylindrical and circular around the said transverse axis (30).

6. Suspension according to claim 5, **characterised in that** the said second surfaces (36) delimit a pair of pins (34) which are integral with the said lateral elements (32), and project towards one another along the said transverse axis (30), whereas the said first surfaces (40) each delimit partially a corresponding axial seat (38) of the said intermediate element (28) which is engaged by a corresponding said pin (34).

7. Suspension according to any one of the preceding claims, **characterised in that** each said lateral element (32) is defined by a pot die-formed tubular element.

8. Suspension according to any one of the preceding claims, **characterised in that** it comprises means for attachment (22) of the said wheels (24), which means are supported by the said lateral elements (32).

9. Suspension according to any one of the preceding claims, **characterised in that** the said means for connection (7) comprise a pair of springs (14) and a pair of shock absorbers (12) and **in that** it comprises portions (16)(18) for attachment of the said shock absorbers and of the said springs (12)(14) which are integral with the said support arms (2).

10. Method for production of a rear suspension (1) with interconnected wheels for a motor vehicle; the method comprising the steps of production of a pair of support arms (2) which can support respective wheels (24) and can be connected to the said vehicle in order to oscillate around at least one axis (10) of oscillation which is spaced by an axis (26) of rotation of the said wheels (24), and of production of a cross-member (20) for connection of the said support arms (2) to one another; **characterised in that** the production of the said cross-member (20) comprises the steps of production of an elongate intermediate element (28) along its own transverse axis, which yields resiliently to torsion around the said transverse axis (30), and a pair of lateral elements (32) which can be connected to the said support arms (2); the method comprising the further steps of placing the said intermediate element (28) in a position which is spaced from the said axis (10) of oscillation and in an intermediate axial position between the said lateral elements (32); of adjusting the angular position of the said intermediate element (28) around the said transverse axis (30) relative to the said lateral elements (32); and of locking the said intermediate and lateral elements (28)(32) to one another after having adjusted the said angular position.

11. Method according to claim 1, **characterised in that** the said lateral elements (32) and intermediate element are locked together by means of welding.
